Europäisches Patentamt

European Patent Office

Office européen des brevets

(19)

(11) **EP 0 537 441 B2**

(12) **NEUE EUROPÄISCHE PATENTSCHRIFT**

(45) Veröffentlichungstag und Bekanntmachung des Hinweises auf die Entscheidung über den Einspruch:
**25.04.2001   Patentblatt 2001/17**

(51) Int Cl.⁷: **G01B 5/255**

(45) Hinweis auf die Patenterteilung:
**02.08.1995   Patentblatt 1995/31**

(21) Anmeldenummer: **92113926.7**

(22) Anmeldetag: **14.08.1992**

(54) **Verfahren und Vorrichtung zur Messung von Radstellungen an einem Kraftfahrzeug**

Method and device for measuring wheel positions in motor vehicles

Méthode et dispositif pour la mesure des positions des roues d'une automobile

(84) Benannte Vertragsstaaten:
**ES FR GB IT**

(30) Priorität: **17.10.1991  DE 4134411**

(43) Veröffentlichungstag der Anmeldung:
**21.04.1993   Patentblatt 1993/16**

(73) Patentinhaber: **Snap-On Deutschland Holding GmbH**
**40822 Mettmann (DE)**

(72) Erfinder: **Castelnuovo, Marco**
**I-20152 Milano (IT)**

(74) Vertreter: **Nöth, Heinz, Dipl.-Phys.**
**Patentanwalt,**
**Arnulfstrasse 25**
**80335 München (DE)**

(56) Entgegenhaltungen:
**EP-A- 0 280 941         DE-A- 3 402 738**
**DE-A- 3 432 781         DE-C- 3 513 316**
**DE-C- 3 740 777         GB-A- 2 025 064**
**US-A- 4 942 666**

EP 0 537 441 B2

**Beschreibung**

Die Erfindung betrifft ein Verfahren und eine Vorrichtung zur Bestimmung von Radstellungen an einem Kraftfahrzeug, bei dem bestimmte Winkelstellungen eines Kraftfahrzeugrades ermittelt werden.

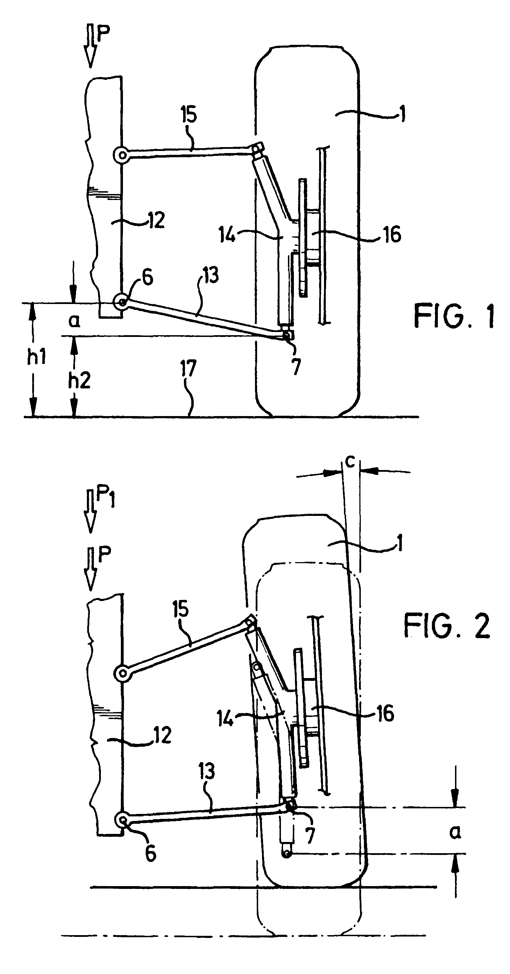

In Kraftfahrzeugen, insbesondere motorgetriebenen Kraftfahrzeugen, mit aktiven und/oder halbaktiven Radaufhängungen, durch welche der Abstand des Fahrzeugs vom Untergrund variabel einstellbar ist, ist es erforderlich, zur Erzielung korrekter geometrischer Radstellungswerte das Niveau zu bestimmen. Das Niveau ist definiert durch den Höhenunterschied, welchen ein am Rad gefedert abgestütztes Kraftfahrzeugteil, beispielsweise das Chassis des Fahrzeugs, gegenüber einem ungefederten Kraftfahrzeugteil, beispielsweise einem mit dem Rad direkt verbundenen Aufhängungsteil, einnimmt. Anhand der Figuren 1 und 2 soll dies im Zusammenhang mit einer Radaufhängung eines Kraftfahrzeugrades erläutert werden.

An einem eine Radnabe 16 lagerndes nicht gefedertes Aufhängungsteil 14 der Radaufhängung sind ein oberer Lenkerhebel 15 und ein unterer Lenkerhebel 13 der Radaufhängung angelenkt. An den beiden Lenkerhebeln 13 und 15 ist ein gefedertes Kraftfahrzeugteil 12, beispielsweise das Chassis, unter Zwischenschaltung nicht näher dargestellter Federn, Stoßdämpfer und dergl., am Aufhängungsteil 14, das die Radnabe 16 trägt, aufgehängt. Das Niveau a ist definiert durch den Höhenunterschied (h1 - h2), den ein Anlenkpunkt 6 für das gefederte Kraftfahrzeugteil 12 am unteren Lenkerhebel 13 und ein Anlenkpunkt 7 des unteren Lenkerhebels 13 am nicht gefederten Aufhängungsteil 14 jeweils gegenüber dem Untergrund 17 einnimmt. Wenn die Radaufhängung und das Rad mit dem normalen Gewicht des federnd aufgehängten Kraftfahrzeuateils 12 belastet ist, nehmen die Bauteile der Radaufhängung und das Rad die in der Fig. 1 dargestellte Position ein.

Wenn das Kraftfahrzeug, insbesondere das Chassis mit einem zusätzlichen Gewicht belastet wird, nehmen die Bauteile der Radaufhängung und das Kraftfahrzeugrad 1 die in der Fig. 2 dargestellten Positionen ein. Es zeigt sich, daß nicht nur das Niveau (h1 - h2) sich ändert, sondern daß auch eine Änderung der Stellung des Kraftfahrzeugrades 1, beispielsweise des Sturzwinkels c, sich einstellt.

Durch die Radaufhängung soll gewährleistet werden, daß das Rad mit dem Untergrund bei allen möglichen Fahrsituationen einen guten Kontakt hat, damit die gewünschten Fahreigenschaften des Kraftfahrzeugs gewährleistet bleiben. Um dies zu gewährleisten, muß die Radstellung in all ihren Parametern (Spur, Sturz, Nachlauf und Spreizung) sich den Bewegungen der Radaufhängung anpassen. Dies erfolgt aufgrund bestimmter Gesetzmäßigkeiten, die durch die Abmessungen und durch die Anordnung der kinematischen Elemente der Radaufhängung festgelegt sind. Je nach den Anforderungen, die der Kraftfahrzeughersteller bei den Fahreigenschaften des Kraftfahrzeugs erfüllen will, weichen die Radaufhängungen unterschiedlicher Kraftfahrzeuge in ihren geometrischen Daten stark voneinander ab. In den meisten Fällen sind den die Kraftfahrzeugwartung durchführenden Werkstätten die geometrischen Daten nicht bekannt. Selbst wenn diese bekannt sind, kennt man das geometrische Verhalten der Radaufhängung als Funktion unterschiedlicher Niveaus aufgrund von Kraftfahrzeugbeladung und anderen Faktoren nicht. Die Kraftfahrzeughersteller stellen daher Korrelationstabellen, die die Abhängigkeit der Radstellungen, insbesondere Radwinkelstellungen, vom Niveau der Radaufhängung enthalten und ferner Bezugswerte angeben, bei denen die Radstellungen, insbesondere Winkelstellungen, gemessen werden sollen.

Hinzukommt, daß die jeweilige Bestimmung des Niveaus der Aufhängung, d.h. die Messung des Abstandes der Radaufhängung gegenüber dem Untergrund, in den Werkstätten Schwierigkeiten bereitet, vor allem was die Genauigkeit dieser Messung anbelangt. In aller Regel läßt sich in einer Montagegrube die Höhenlage des Untergrundes, auf welchem das Rad aufsteht, nicht genau bestimmen, da die Montagegruben mit nach oben ragenden Sicherheitskanten versehen sind. Man ist daher in aller Regel auf fiktive horizontale Ebenenbestimmungen angewiesen. Eine einheitliche Meßmethode gibt es daher nicht, und die einzelnen Werkstätten behelfen sich so gut sie können mit diesen Schwierigkeiten.

Aus der DE-A-34 32 781 ist eine Meßvorrichtung zur Bestimmung der Radstellungen eines Kraftfahrzeuges, insbesondere im Fahrbetrieb, bekannt. Die Meßvorrichtung besteht im wesentlichen aus einem Gelenkmechanismus, der einerseits über einen Adapter mit dem Rad oder dem Radträger verbindbar und andererseits mit einem karosseriefesten Stützteil verbunden ist. Die Bewegungsmöglichkeiten am Gelenkmechanismus werden jeweils mit einem Drehwinkelgeber erfaßt. Mit der Meßvorrichtung können Spur- und Sturzwinkel eines Rades sowie die räumlichen Koordinaten eines Punktes auf der Radachse bestimmt werden.

Aus der EP 0 280 941 A1 ist es bekannt, Radstellungen von am Kraftfahrzeug montierten Rädern berührungslos mit Hilfe von Laserstrahlen zu messen. Aus der DE 35 13 316 C2 ist es bekannt, zum Einstellen der Radspur bei der Herstellung von Kraftfahrzeugen die Höhendifferenz zwischen den beiden Spurstangengelenken sowohl durch Abtasten der Radfelge als auch durch Abtasten eines Karosserieteils nahe dem oberen Spurstangengelenk zu bestimmen und danach jene Radspur einzustellen, welche für den gemessenen Wert der Höhendifferenz vorgesehen ist.

Aufgabe der Erfindung ist es daher, ein universell anwendbares Meßverfahren für die Niveaubestimmung zu schaffen, so daß diese reproduzierbar bei der Radstellungsmessung berücksichtigt werden kann, und eine Vorrichtung der eingangs genannten Art zu schaffen, die sich ohne Schwierigkeiten in übliche Radstellungsmeßsysteme integrieren läßt.

Diese Aufgabe wird beim Verfahren erfindungsgemäß durch die kennzeichnenden Merkmale des Anspruchs 1 und bei der Vorrichtung erfindungsgemäß durch die kennzeichnenden Merkmale des Anspruchs 4 gelöst.

Bei der Erfindung werden mehrere unterschiedliche vertikale Abstände eines Karosserieteils, beispielsweise der Außenkante des Kotflügels des Kraftfahrzeugs, von der Radmitte (Radachse) sowie die dazu gehörigen Radstellungen, insbesondere Winkelstellungen, gemessen. Die unterschiedlichen vertikalen Abstände lassen sich beispielsweise durch unterschiedliche Belastungen der Karosserie des Kraftfahrzeugs herstellen. Hierbei können die von den Kraftfahrzeugherstellern in den Tabellen vorgegebenen Bezugswerte berücksichtigt werden. Die ermittelten Meßwerte werden dann zur Bestimmung einer Abhängigkeit der Radstellung vom Niveau zueinander in Beziehung gesetzt. Auf diese Weise ist es möglich, entsprechend den Spezifikationen der Kraftfahrzeughersteller die Korrelationen zwischen Niveau und Radstellung zu bestimmen. Es ist jedoch auch möglich, generell die Abhängigkeit der Radstellung vom Niveau ohne Vorgaben der Kraftfahrzeughersteller für jeden Kraftfahrzeugtyp zu ermitteln.

Bei der Messung wird das Rotationszentrum (Achse des Rades) für die Bestimmung der Lage der nicht gefederten Bestandteile der Radaufhängung verwendet. Ein in vertikaler Richtung darüber liegendes Teil der Karosserie, insbesondere die Außenkante des Kotflügels, wird als Meßpunkt für die gefederten Bestandteile der Radaufhängung verwendet. Die Radachse läßt sich ohne weiteres mittels eines herkömmlichen Adapters, mit dem der Detektor zur Erfassung der Radstellungen, insbesondere Winkelstellungen, am Rad befestigt wird, ermitteln. Die Niveaumessung läßt sich mithin in den Meßvorgang, bei welchem die Radstellung gemessen wird, ohne weiteres integrieren.

Für die Durchführung der Niveaubestimmung wird eine Abstandsmeßeinrichtung vorgesehen, die den vertikalen Abstand zwischen Radmitte, welche durch den über den Adapter am Rad befestigten Detektor oder durch ein Bestandteil des Adapters bestimmt ist, und den schon erwähnten gefederten Kraftfahrzeugteil, insbesondere Karosserieteil, ermittelt. Der Detektor und Adapter sind zentriert am Kraftfahrzeugrad befestigt. Es kann hierbei ein selbstzentrierender Adapter zu Hilfe genommen werden.

Der Detektor, mit welchem die Abstandsmeßeinrichtung gekoppelt ist, ist ein Detektor für die Radstellungsmessung, beispielsweise für einen oder mehrere der Radstellungsparameter Spur, Sturz, Spreizung, Nachlauf. Beispielsweise können Detektoren verwendet werden wie sie in den älteren, jedoch nicht vorveröffentlichten deutschen Patentanmeldungen P 40 39 881 und P 41 01 047.7 beschrieben sind.

Anhand der Figuren wird an einem Ausführungsbeispiel die Erfindung noch näher erläutert.

Es zeigt:

Fig. 1 schematisch die Stellung eines Rades mit zugeordneter Radaufhängung bei normaler Fahrzeugbelastung;

Fig. 2 die in der Fig. 1 dargestellte Anordnung bei erhöhter Belastung;

Fig. 3 eine Meßanordnung, die ein Ausführungsbeispiel der Erfindung ist; und

Fig. 4 ein Blockschaltbild für die Auswertung der Signale, welche mit der Meßanordnung in der Fig. 3 gewonnen werden.

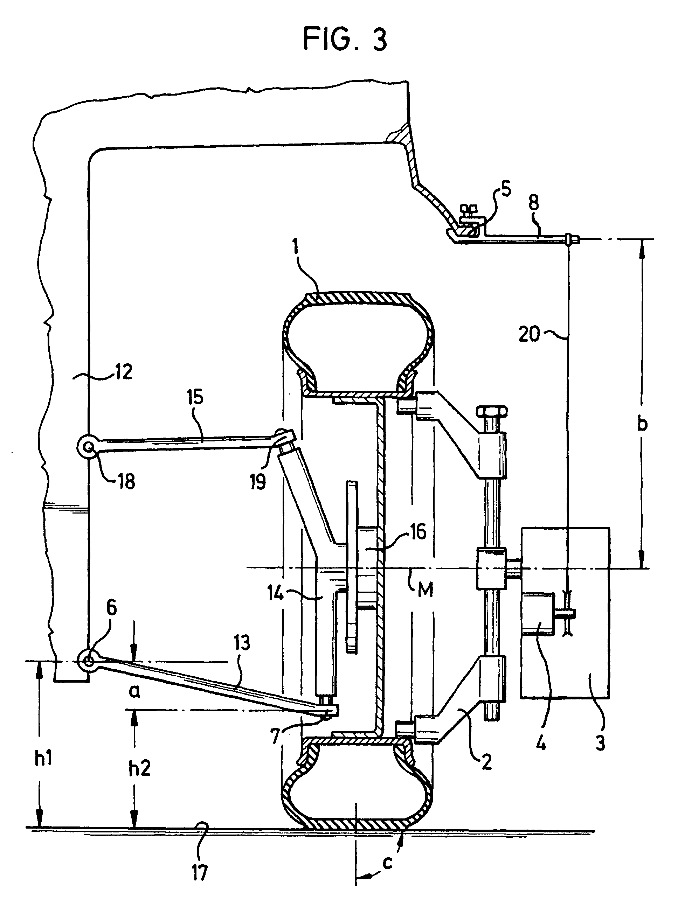

In der Fig. 3 ist ein Kraftfahrzeugrad 1, bestehend aus Scheibenrad und aufgezogenem Luftreifen, dargestellt. Zur definierten Führung des Rades gegenüber dem Fahrzeughauptteil, beispielsweise dem Chassis (im folgenden mit gefedertem Fahrzeugteil 12 bezeichnet), ist in bekannter Weise eine Radaufhängung vorgesehen. Diese Radaufhängung ist in der Fig. 3 schematisch dargestellt und besteht aus einem oberen Lenkerhebel 15 und einem unteren Lenkerhebel 13. Der obere Lenkerhebel 15 ist an einer Anlenkstelle 18 am gefederten Kraftfahrzeugteil 12 und an einer Anlenkstelle 19 an einem nicht gefederten Teil 14 der Radaufhängung angelenkt. Der untere Lenkerhebel 13 ist an einer Anlenkstelle 6 mit dem Kraftfahrzeughauptteil 12 und mit einer Anlenkstelle 7 am nicht gefederten Teil 14 der Aufhängung angelenkt. Der nicht gefederte Teil 14 trägt auch eine Radnabe 16, an welcher das Kraftfahrzeugrad 1 in bekannter Weise befestigt ist. Durch die Radnabe 16 ist eine Radachse M definiert, die das Rotationszentrum der Drehung des Rades bildet.

Über einen Adapter 2, der in bekannter Weise ausgebildet sein kann und gegebenenfalls selbst zentrierend ist, wird ein Detektor 3 definiert gegenüber der Radachse M am Kraftfahrzeugrad 1 befestigt. Der Detektor 3 ist in bekannter Weise ausgeführt und dient zur Messung der Radstellung, beispielsweise zur Messung des Sturzwinkels c. Er kann jedoch auch zur Messung weiterer Radstellungswinkel, wie beispielsweise Spur, Vorlauf und Spreizung, dienen.

Mit dem Detektor 3 ist ein Abstandssensor 4 gekoppelt, so daß auch der Abstandssensor 4 gegenüber der Radachse M eine definierte Lage einnimmt. Der Abstandssensor 4 kann im Gehäuse des Detektors 3 angeordnet sein. Als Abstandssensor eignet sich ein Potentiometer, insbesondere Drehpotentiometer, das über einen Draht 20 mit einem Bezugselement 8, beispielsweise in Form eines Stabes, verbunden ist. Das Bezugselement 8 kann mit einem starr mit dem Fahrzeughauptteil 12 verbundenen Fahrzeugteil, insbesondere Karosserieteil, z.B. der Außenkante des Fahrzeugkotflügels, der vertikal über der Radachse M liegt, befestigt werden. Die Befestigung kann beispielsweise mit Hilfe einer Befestigungsschraube erfolgen. Die Auszugslänge des Drahtes 20, welche vom Abstandssensor 4 (z.B. Drehpotentiometer) erfaßt wird, ist ein Maß für den vertikalen Abstand b zwischen der Außenkante des Kotflügels und der Radachse M. Die Radachse M behält gegenüber der Anlenkstelle 7, für die der Abstand h2 vom Untergrund 17 bei der Niveaubestimmung maßgebend ist, einen gleichbleibenden Abstand über die Radnabe und das 16 Aufhängungsteil 14. Ferner ist das in vertikalem Abstand über der Radachse M liegende Karosserieteil, mit welchem das Bezugselement 8 verbunden ist, beispielsweise die Kotflügelaußenkante starr mit der Anlenkstelle 6, welche bestimmend für den Abstand h1 vom Untergrund 17 ist, verbunden. Durch Bestimmung des vertikalen Abstandes b zwischen der Radachse M und dem federnd aufgehängten Kraftfahrzeugteil, beispielsweise der äußeren Kotflügelkante 5, läßt sich eine dem Niveau a = (h1 - h2) proportionale Maßangabe gewinnen. Durch den Abstandssensor 4 kann ein dem Abstand b, d.h. dem Niveau a proportionales elektrisches Signal erzeugt werden, das dann, wie noch ausgeführt wird, weiter verarbeitet wird.

Anstelle eines ausziehbaren Drahtes bzw. Rad 20 oder einer Schnur zwischen dem stabförmigen Bezugselement 8 und dem als Potentiometer ausgebildeten Abstandssensor 4 kann die Abstandsmeßeinrichtung auch als optische Abstandsmessung unter Zuhilfenahme von Spiegeln und Lichtquellen, wobei beispielsweise das Bezugselement 8 duch einen Spiegel dargestellt wird, ausgebildet sein. Hierbei können - soweit sie für die Längenmessung geeignet sind - die Meßprinzipien zur Anwendung kommen, welche in den älteren deutschen Patentanmeldungen P 40 39 881 und P 41 01 047 beschrieben sind.

Durch die in der Fig. 3 dargestellte Meßanordnung können mithin das Niveau a = (h1 - h2) als auch die Radstellung ermittelt werden. Dabei ist die Niveaumessung integraler Bestandteil der Radstellungsmessung. Die Niveaumeßanordnung, bestehend aus den Bauteilen 4, 8 und 20, welche als Abstandsmeßeinrichtung ausgebildet ist, kann vollständig in die Meßanordnung des Detektors 3 integriert sein.

Mit Hilfe der dargestellten Meßanordnung können bei unterschiedlicher Fahrzeugbelastung verschiedene Niveauwerte festgestellt werden. Die verschiedenen Messungen können unter Beachtung der Kraftfahrzeughersteller-Spezifikationen ausgeführt werden, wobei bestimmte Vorgaben für die Kraftfahrzeugbelastung und/oder verschiedene Niveauwerte a0, a1 ..... an eingehalten werden können.

Es ist jedoch auch möglich, unabhängig von den Kraftfahrzeugherstellervorgaben generell verschiedene Werte b0, b1 ..... bn für das Niveau (h1 - h2) als universell verwendbare Werte zu bestimmen.

Wie aus den Fig. 1 und 2 hervorgeht, ändern sich nicht nur die Niveau-Werte, sondern auch die Radstellungswerte, insbesondere Radwinkelwerte. In der Fig. 2 ist die Änderung des Sturzwinkels c verdeutlicht. Die Änderung der Radstellung wird durch den Detektor 3 festgestellt.

Die vom Abstandssensor 4 gelieferten niveauproportionalen Werte a0, a1 ..... an bzw. b0, b1 ..... bn und die vom Detektor 3 gelieferten Radstellungswerte c0, c1 ..... cn bzw. d0, d1 ..... dn werden einem Rechner 9 (Prozessor) zur weiteren Verarbeitung zugeleitet. Mit d0, d1..... dn sind die Winkelwerte bezeichnet, welche nicht den vom Kraftfahrzeughersteller vorgegebenen Winkelwerten entsprechen, sondern sich bei beliebigen Niveauänderungen b0, b1 ..... bn jeweils ergeben. Die vom Kraftfahrzeughersteller vorgegebenen Werte für verschiedene Niveaus a0 ..... an und Radstellungen c0 ..... cn können auch in einem mit dem Rechner 9 verbundenen Speicher 10 abgelegt sein.

Der Rechner 9 kann beispielsweise folgende Rechneroperationen durchführen:

$$x = a/b.$$

Hierdurch gewinnt man das Verhältnis zwischen dem vom Hersteller vorgegebenen Niveau-Wert und dem frei gemessenen Niveau-Wert.

$$y = c/a$$

Hierdurch gewinnt man das Verhältnis zwischen vom Hersteller vorgegebener Radstellung und vom Hersteller vorgegebenen Niveau-Wert.

$$z = d/b$$

Hierdurch gewinnt man das Verhältnis zwischen frei gemessener Radstellung und frei gemessenem Niveau-Wert.

Ferner ist es möglich, das Verhältnis zwischen Radstellungsänderung und Niveau-Änderung zu bestimmen, wobei die vom Kraftfahrzeughersteller vorgegebenen Niveau- und Radstellungswerte eingesetzt werden können und/oder die frei gemessenen Universalwerte eingesetzt werden können. Es lassen sich beispielsweise folgende Verhältnisse bzw. Korrelation berechnen:

$$yln = (cn - cl)/(an - al)$$

oder

$$zln = (dn - dl)/(bn - bl)$$

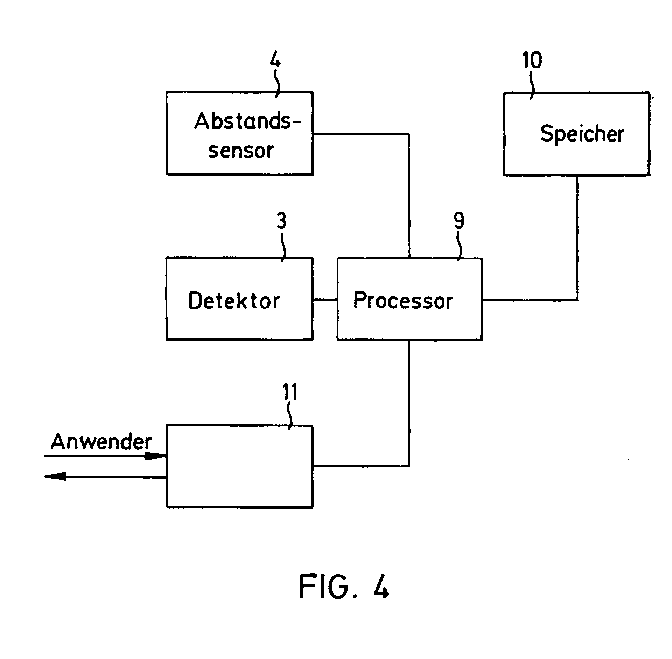

Die verschiedenen Korrelationswerte, welche vom Rechner 9 ermittelt werden, können ebenfalls im Speicher 10 oder in einem gesonderten Speicher abgelegt werden und stehen für eine weitere Meßwertauswertung zur Verfügung. Wie in der Fig. 4 dargestellt ist, kann der Anwender über eine Schnittstelle 11 mit dem Rechner 9 in Verbindung treten. Hierzu kann der Anwender eine Eingabetastatur oder ähnliche Eingabemittel verwenden. Über die Schnittstelle 11 kann ein Drukker oder ein anderes Anzeigemittel, beispielsweise ein Bildschirm, mit dem Rechner 9 verbunden sein. Unter Verwendung der oben erläuterten Parameter x, y, z sowie der Korrelationen zwischen Radstellungsänderung und Niveau-Änderung sowohl bei den vom den Kraftfahrzeugherstellern vorgegebenen Spezifikationen als auch bei den in der Werkstatt bzw. generell meßbaren Werten ist es möglich, die Abhängigkeit, insbesondere nichtlineare Abhängigkeit, der Radstellung vom Niveau zu bestimmen und beispielsweise im Speicher 10 abzuspeichern. Diese Korrelationen sind dann für weitere Messungen bei den jeweils bestimmten Fahrzeugtypen wieder verwendbar.

**Patentansprüche**

1. Verfahren zur Bestimmung von Radstellungen an einem Kraftfahrzeug, bei dem insbesondere bestimmte Winkelstellungen des Kraftfahrzeugrades gemessen werden, in Abhängigkeit vom jeweiligen Niveau definiert durch den Höhenunterschied, welchen ein am Rad gefedert abgestütztes Kraftfahrzeugteil gegenüber einem ungefederten Kraftfahrzeugteil einnimmt, wobei mehrere unterschiedliche vertikale Abstände eines Karosserieteils des Kraftfahrzeugs von der Radmitte direkt gemessen werden und ferner die zugehörige Radstellung gemessen werden,

   die Meßwerte zur Bestimmung einer Abhängigkeit der Radstellung vom jeweiligen Niveau zueinander in Beziehung gesetzt werden, und die derart ermittelten Beziehungen zur Wiederverwendung bei der Bestimmung von Radstellungen an typgleichen Kraftfahrzeugen gespeichert werden.

2. Verfahren nach Anspruch 1, dadurch gekennzeichnet, daß der vertikale Abstand zwischen Kotflügelaußenkante des Kraftfahrzeugs und Radmitte gemessen wird.

3. Verfahren nach Anspruch 1 oder 2, dadurch gekennzeichnet, daß die Messwerte bei wenigstens drei verschiedenen vertikalen Abständen zwischen Karosserieteil und Radmitte erfasst werden.

4. Vorrichtung zur Bestimmung von Radstellungen nach dem Verfahren in Anspruch 1 an einem Kraftfahrzeug mit einem über einen Adapter am Kraftfahrzeugrad befestigten Detektor für Winkelmessungen und mit einer Abstandsmeßeinrichtung (4, 8) zur Messung des vertikalen Abstands (b) zwischen Radmitte und einem Karosserieteil des Kraftfahrzeugs, dadurch gekennzeichnet, daß die Abstandsmeßeinrichtung (4, 8) und der Detektor (3) mit einem Rechner (9), welcher die Meßwerte der vetikalen Abstände und der jeweils zugeordneten Radstellungen zueinander in Bezug setzt und einen oder mehrere Korrelationsfaktoren für die Abhängigkeit der Radstellung vom Niveau bestimmt, verbunden sind und daß die Abstandsmeßeinrichtung (4, 8) derart ausgebildet ist, daß sie den vertikalen Abstand zwischen dem Karosserieteil des Kraftfahrzeugs und der Radmitte direkt mißt.

5. Vorrichtung nach Anspruch 4, dadurch gekennzeichnet, daß die Abstandsmeßeinrichtung mit dem über den Adapter (2) mit dem Rad verbundenen Detektor (3), der die Radstellungsmessung vornimmt, gekoppelt ist.

6. Vorrichtung nach Anspruch 5, dadurch gekennzeichnet, daß der Detektor (3) den Sturzwinkel des Rades erfaßt.

7. Vorrichtung nach einem der Ansprüche 4 bis 6, dadurch gekennzeichnet, daß der bzw. die Korrelationswerte in einem Speicher (10) abgelegt ist bzw. sind.

**Claims**

1. A method of determining wheel positions on a motor vehicle, in which in particular given angular positions of the motor vehicle wheel are measured, in dependence on the respective level defined by the difference in height adopted by a part of the motor vehicle which is supported in sprung relationship on the wheel, relative to an unsprung part of the motor vehicle,
   wherein a plurality of different vertical spacings of a part of the body of the motor vehicle from the centre of the wheel is measured directly and also the associated wheel position is measured,

   the measurement values are related to each other to determine a dependency of the wheel position on the respective level, and the relationships ascertained in that way are stored for re-use in determining wheel positions on motor vehicles of the same type.

2. A method according to claim 1 characterised in that the vertical spacing between the wheel centre and the outside edge of the wing of the motor vehicle is measured.

3. A method according to claim 1 or claim 2 characterised in that the measurement values are detected at at least three different vertical spacings between the part of the body and the wheel centre.

4. Apparatus for determining wheel positions in accordance with the method of claim 1 on a motor vehicle comprising a detector for angular measurement operations, which is fixed to the motor vehicle wheel by way of an adaptor, and comprising a spacing measuring means (4, 8) for measuring the vertical spacing (b) between the wheel centre and a part of the body of the motor vehicle, characterised in that the spacing measuring means (4, 8) and the detector (3) are connected to a computer (9) which relates the measurement values in respect of the vertical spacings and the respectively associated wheel positions to each other and determines one or more correlation factors for the dependency of the wheel position on the level, and that the spacing measuring means (4, 8) is such that it directly measures the vertical spacing between the part of the body of the motor vehicle and the wheel centre.

5. Apparatus according to claim 4 characterised in that the spacing measuring means is coupled to the detector (3) which effects the wheel position measurement operation and which is connected to the wheel by way of the adaptor (2).

6. Apparatus according to claim 5 characterised in that the detector (3) detects the camber angle of the wheel.

7. Apparatus according to one of claims 4 to 6 characterised in that the correlation value or values is or are stored in a memory (10).


**Revendications**

1. Procédé pour déterminer des positions de roue dans un véhicule automobile, selon lequel on mesure notamment des positions angulaires déterminées de la roue du véhicule automobile, en fonction du niveau respectif défini par la différence de hauteur que présente une partie du véhicule automobile supportée par la roue de façon suspendue, par rapport à une partie non suspendue du véhicule,

selon lequel on mesure directement plusieurs distances verticales différentes entre une partie de la carrosserie du véhicule automobile et le centre de la roue et on mesure en outre la position de roue associée,

on met en relation les valeurs de mesure pour la détermination d'une dépendance de la position de roue vis-à-vis du niveau respectif, et on mémorise les relations déterminées de cette manière, en vue de leur réutilisation pour la détermination de positions de roues sur des véhicules automobiles du même type.

2. Procédé suivant la revendication 1, caractérisé par le fait qu'on mesure la différence verticale entre le bord extérieur de l'aile du véhicule automobile et le centre de la roue.

3. Procédé suivant la revendication 1 ou 2, caractérisé par le fait qu'on détecte les valeurs de mesure pour au moins trois distances verticales différentes entre la partie de la carrosserie et le centre de la roue.

4. Dispositif pour déterminer des positions de roue conformément au procédé suivant la revendication 1, sur un véhicule comportant un détecteur fixé à la roue du véhicule au moyen d'un adaptateur et servant à effectuer des mesures angulaires, et un dispositif de mesure de distance (4,8) servant à mesurer la distance verticale (b) entre le centre de la roue et une partie de la carrosserie du véhicule automobile, caractérisé par le fait que le dispositif de mesure de distance (4,8) et le détecteur (3) sont reliés à un calculateur (9), qui met en rapport les valeurs de mesure des distances verticales et les positions de roue respectivement associées, et détermine un ou plusieurs facteurs de corrélation pour la dépendance de la position de roue vis-à-vis du niveau, et en ce que le dispositif de mesure de distance (4, 8) est tel qu'il mesure directement la distance verticale entre la partie de la carrosserie du véhicule automobile et le milieu de la roue.

5. Dispositif suivant la revendication 4, caractérisé par le fait que le dispositif de mesure de distance est accouplé au détecteur (3), qui est relié à la roue par l'intermédiaire de l'adaptateur (2) et qui exécute la mesure de la position de roue.

6. Dispositif suivant la revendication 5, caractérisé par le fait que le détecteur (3) détecte l'angle de carrossage de la roue.

7. Dispositif suivant l'une des revendications 4 à 6, caractérisé par le fait que la ou les valeurs de corrélation sont mémorisées dans une mémoire (10).

FIG. 1

FIG. 2

# FIG. 3

FIG. 4